# EUROPEAN PATENT SPECIFICATION

(11) **EP 3 329 302 B1**
(45) Date of publication and mention of the grant of the patent: **30.12.2020**
(21) Application number: 16766611.4
(22) Date of filing: 29.07.2016
(51) Int. Cl.: G01T 1/178, G01T 7/00

(54) **METHOD AND APPARATUS FOR DETECTING INTRINSIC RADIOACTIVITY OF RADIOACTIVE SAMPLES**
VERFAHREN UND VORRICHTUNG ZUM NACHWEIS INTRINSISCHER RADIOAKTIVITÄT VON RADIOAKTIVEN PROBEN
PROCÉDÉ ET APPAREIL DE DÉTECTION DE RADIOACTIVITÉ INTRINSÈQUE D'ÉCHANTILLONS RADIOACTIFS

(30) Priority: 31.07.2015 IT UB20152707
(43) Date of publication of application: 06.06.2018
(73) Proprietor: Istituto Nazionale Di Fisica Nucleare (INFN), 00044 Frascati RM (IT)
(72) Inventor: SALA, Elena, 20081 Abbiategrasso (MI) (IT); PREVITALI, Ezio, 20068 Peschiera Borromeo (MI) (IT); CLEMENZA, Massimiliano, 20162 Milano (IT)
(74) Representative: Borsano, Corrado
(86) International application number: PCT/IB2016/054549
(87) International publication number: WO 2017/021841

(56) References cited:
- EP-A2- 2 166 376
- WO-A1-2015/089580
- US-A- 3 914 602
- US-A1- 2014 299 784
- M. CLEMENZA ET AL: "Measurement of airborne 131I, 134Cs and 137Cs due to the Fukushima reactor incident in Milan (Italy)", JOURNAL OF ENVIRONMENTAL RADIOACTIVITY., vol. 114, 1 December 2012 (2012-12-01), pages 113-118, XP055263568, GB ISSN: 0265-931X, DOI: 10.1016/j.jenvrad.2011.12.012
- Johan Kastlander: "In situ measurements of radionuclide concentration in soil : An investigation into detector properties and methods", , 1 January 2010 (2010-01-01), XP055263571, ISBN: 978-91-7-447192-2 Retrieved from the Internet: URL:https://www.diva-portal.org/smash/get/ diva2:373882/FULLTEXT01.pdf [retrieved on 2016-04-07]

## Description

### Field of the invention

The present invention relates to a method and apparatus for detecting intrinsic radioactivity of radioactive samples, in particular for controlling material from radioactive "fall-out".

### Background art

Within the control of material from radioactive "fall-out" from nuclear power plants or nuclear proliferation, there is the problem of monitoring the environment subjected to fall-out or having control over material that may contain transuranic elements.

The techniques in use today provide the radiochemical measurement of transuranic elements, particularly plutonium, present in the environment or in specific materials.

The problem with radiochemical measurements is mainly due to the pretreatment of the sample to be measured, before the measurement itself. Whether measurements are carried out with alpha spectrometry or with mass spectrometry, the sample to be measured must be subjected to pretreatments that allow concentrating the transuranic elements to be measured: this leads to the execution times of measurements ranging from the order of one month (alpha spectrometry) to over a week (mass spectrometry).

This is clearly a major limitation in the case when as a result of a fall-out, it is necessary to intervene to protect particularly exposed populations or in case of potential presence of nuclear material. In these cases, decisions must be made quickly and actually provide feedback on the passing or not of certain limits imposed by well-established international practices. It is also to be considered that if the detection of plutonium is a clear indication of the possible traffic of radioactive material for the proliferation, in the case of fall-out in the environment, in addition to the transuranic elements there are other lighter radioactive elements that provide an easy measurement of the level of soil contamination (for example), but there is no doubt that the degree of toxicity and persistence that the transuranic elements have can dramatically shift the context within which it is necessary to take a decision whether or not to evacuate the contaminated area.

It is therefore necessary to identify measurement methods that provide sufficient flexibility and promptness of response to the control and monitoring structures in case of an event that could result in the release of nuclear material.

It should be noted that the control must be made on the basis of known measurement limits and is not tied on the other hand to obtaining very high sensitivity that can already be achieved with existing techniques.

Approaches to solve the problem of the response timing have mainly been directed to speeding up the chemical preparation techniques, in particular as regards mass spectrometry. From currently known data, it is not however possible to go below 24 hours total time of preparation and measurement, with two large additional limitations: the mass spectrometry laboratory cannot be moved near the places where it is necessary to perform the measurements, and then the complete procedure involves also a transport step in addition to a sampling step which, since potentially radioactive material is involved, creates some problems; moreover, mass spectrometry measurements are particularly costly and therefore in situations in which no particularly critical data were obtained, this would lead to the consequence of having faced unnecessary expenses. Moreover with this approach it would be quite complex to organize large-scale analysis as in the case of fall-out from nuclear power plant.

The critical shortcomings in current techniques can be traced back to the low capacity of intervention in critical areas subjected to nuclear fall-out and long processing times of the information gathered. As regards mass spectrometry, additional shortcomings are also related to the high cost of measurement, and in some respects also to the difficulty of use that requires the involvement of a relatively advanced chemistry laboratory to allow the treatment of the samples before the measurement step. This last aspect involves inter alia the fact that reagents and methods should be used that require a control, with further complications in the management of the measurement in its entirety.

Therefore, the known methods for detecting radioactive elements that are hazardous for their toxicity involve long measurement activities to be reproduced in laboratories equipped not only for the measurement, but also for the treatment of the matrices to be measured.

US2014/299784-A1 describes a device for detecting radioactive substances, configured to detect a radioactive substance present in an environment in which the radiation arrives from various directions. The device comprises a radiation detecting element having a thickness which interrupts and detects characteristic X-rays coming from the radioactive substance, present in the specified direction and radiating both gamma and X-rays, and which lets gamma rays pass from the radioactive substance. The device comprises a screening body having a thickness which explores the X-rays characteristic of radiations arriving from directions other than the specified direction and lets the gamma rays of the radiation arriving from the directions other than the specified direction pass. US3914602 describes a plutonium monitor comprising an X-ray detector and an alpha detector. The detection of plutonium is based on the coincident detection of x-ray and alpha emissions within the environment.

Therefore, there is the need to find a method of measurement, in particular for the uranium and plutonium isotopes, which allows a rapid detection for the non-proliferation and environmental monitoring.

### Summary of the invention

Therefore, the object of the present invention is to provide a method and apparatus for detecting intrinsic radioactivity of radioactive samples, in particular for controlling material from radioactive "fall-out", aimed at overcoming all of the above drawbacks. The method according to the invention is as defined by independent claim 1, and subsequent claims 2-6, whereas the apparatus is as defined by independent claim 7, and subsequent claims 8-10.

In the characterization of the transuranic elements, the choice of using alpha spectrometry is canonical, as almost all of these elements decay through the emission of an alpha particle; the use of mass spectrometry is also canonical as in the spectrum of natural masses there is no element having masses equivalent to transuranic elements, all these being artificial elements. A technique that would be quite useful and flexible would be gamma spectrometry, but these elements have extremely low probabilities of emission of gamma photons, as a result of decay, and therefore it is possible to use this technique only for materials that exhibit an extremely high contamination.

The idea of the invention instead relies on a method that provides for the measurement of X photons, therefore emitted by the atom and not by the nucleus: X photons, for transuranic elements, have a probability of emission on the scale of a few percent.

Through the measurement of this emitted radiation, it is possible to achieve sensitivity, for the most interesting elements, in the order of 1 Bq/kg, which does not reach the best levels of current techniques, which amount to approximately 0.01 Bq/kg, but is still well below the levels of "clearance" typically indicated by the IAEA body on the scale of 100 Bq/kg.

This leads to an important practical result: it is possible to make the measurement directly on the crude sample without the need for any chemical treatment, with the consequent significant decrease of both the analysis times and of the measurement costs.

It has been found that the main steps for implementing such a measurement method involve:
- The choice of the radiation detector that must be able to separate X rows inside of the measurement spectrum: thus, semiconductor detectors or bolometers. There is therefore the need to use instruments that show a very high energy resolution.
- The choice of the detector size: it is necessary to use detectors having large surfaces at the expense of the detector volume. This is already a much less canonical choice since the semiconductor detectors normally used for X-ray spectroscopy have small surfaces that do not allow achieving the required measurement accuracy. Specific large area sensors are therefore necessary in the present context.
- The determination of the measurement parameters, in particular the detection efficiency of X photons emitted according to composition, shape and mass of the sample to be measured. This involves the fact of using very advanced simulation tools that allow obtaining a quantitative measure of the degree of contamination present within the sample. Methods for measuring the X-ray radiation emitted by transuranic elements are already known. These measures have however been made for the characterization of the radiation, in the sense of determining the type of photons emitted by a radioactive nucleus, with quantitative limits not sufficient to ensure the clearance levels normally required by international control bodies (IAEA).

Moreover, known systems are also missing a methodological analysis approach that allows separating the quantitative measurements from the matrix within which the radioactive material is dispersed, in the sense that the known types of measurements are aimed to characterize sources, rather than a generic material (soil, metals, etc.) in which the radioactive element to be measured is dispersed.

The object of the present invention is a method as defined by independent claim 1.

Another object of the present invention is an apparatus as defined by independent claim 7.

A particular object of the present invention is a method and apparatus for detecting intrinsic radioactivity of radioactive samples, as better described in the claims, which form an integral part of the present description.

### Brief description of the figures

Further objects and advantages of the present invention will become apparent from the following detailed description of an exemplary embodiment thereof (and of variants thereof) and with reference to the accompanying drawings, which are merely illustrative and non-limiting, in which:
figure 1 shows a first variant of a scheme of an apparatus for determining the energetic spectrum of the present invention which involves the use of a single large area detector with high energy resolution, applied to a side of the sample being measured;
figure 2 shows a second variant of a scheme of an apparatus for determining the energetic spectrum of the present invention which involves the use of two large area detectors with high energy resolution, applied to both sides of the sample being measured;
figure 3 shows a logical-functional block diagram of the apparatus for detecting radioactive elements object of the invention.

### Detailed description of exemplary embodiments

The method that has been developed and tested comprises estimating concentrations of these isotopes (of transuranic elements) through the detection of X-rays subsequent to their decay. Isotopes such as ²³⁸Pu, ²³⁹Pu, ²⁴⁰Pu, ²³⁵U alpha decay, with subsequent emission of low BR photons (10⁻³%), the X-rays emitted have BR in the order of a few percent to tens percent.

Using the probability of X-ray emission resulting from the decay of these isotopes it is possible to make measurements quickly and with sensitivity that allow achieving the levels required by international standards.

In order to carry out these measurements it is necessary to use detectors that have high efficiency in the energy region of interest from 5 keV to 30 keV, a good energetic resolution, preferably <500 eV FWHM, the possibility to be easily transportable as well as having large input windows, i.e. front surfaces that allow the radiation to reach the active detector volume. The latter requirement is particularly critical because of the short path that an X photon with energy of the order of 10 keV can travel within the material where it is generated, and therefore, in fact, only a small thickness, typically less than 2 cm, of material directly facing the detector can allow acceptable measurement sensitivity without chemically pretreating the sample to be analyzed. This technique is non-destructive and therefore easy to use.

The two requirements, i.e. large surface area and high energetic resolution, involve a specific choice of the detectors to be used in this field in addition to requiring sophisticated analysis tools for the correct determination of the absolute measurement efficiency: an incorrect determination of the latter could lead to gross errors in the quantitative determination of radioactive contaminants.

In order to comply with the above requirements, semiconductor or bolometric detectors are used which allow reaching also the low energy thresholds required for the identification of characteristic X-rays. It has been demonstrated that through the use of large area planar germanium detectors, the expected results can be obtained with a sensitivity far below the clearance levels that are set by the control bodies in charge. The same result can be achieved using specific large area planar silicon detectors; namely, a multiplicity of detectors can also be used, such as placed side-by-side, in order to maximize the measurement surface.

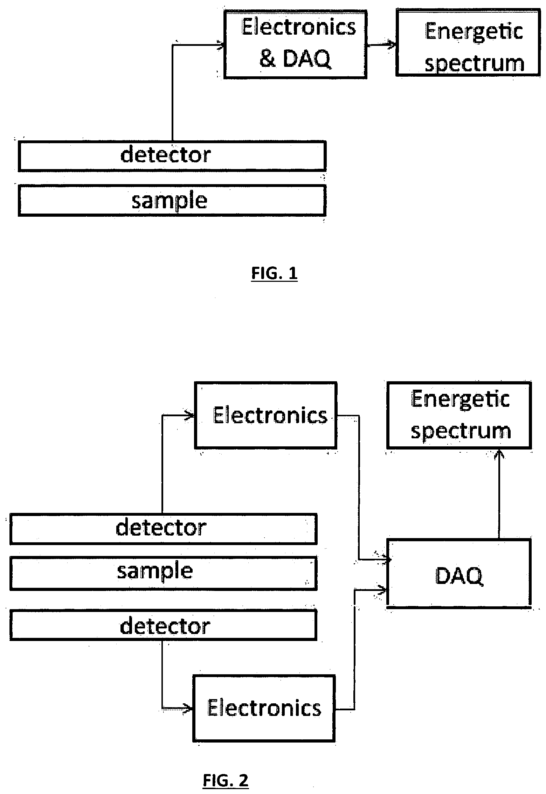

X-ray detection procedure for determining the specific radioactivity of a sample, object of the invention, uses a measurement apparatus comprising means for the execution of the method of the invention, in particular:
- One (fig. 1) or two (fig. 2) detectors, facing one or two sides of the sample to be measured, respectively;
- One or more electronic amplifiers;
- One or more analog-to-digital converters (ADC) associated with multichannel analysis (MCA) devices for counting the events;
- Data acquisition system DAQ and signal processing means;
- Sample container or dedicated compartment.

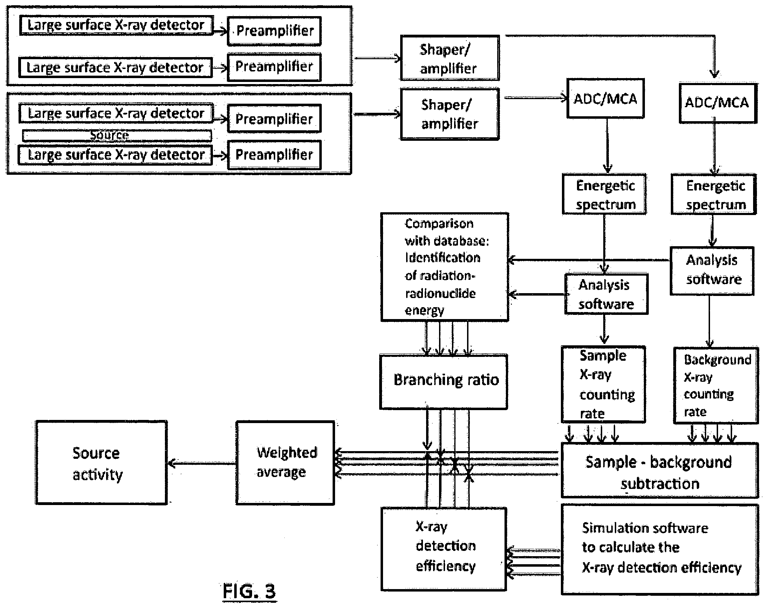

A non-limiting embodiment example of the apparatus will be described hereinafter with reference to figure 3.

The detectors of the invention may be different types of detectors, such as semiconductor or bolometric, provided they have a high energetic resolution not higher than 0.5 keV FWHM, in the energy range of between 5 and 30 keV.

If two or more detectors are used, these can be positioned either interfaced with the sample or side by side in order to increase the total detection area. The detectors must have a large input surface for the X photons emitted by the decay to be studied, preferably surfaces equal to or larger than 10 cm².

At the same time, the detectors must have a very thin dead layer on the input window, i.e. a thin thickness (<1 µm) of material that does not contribute to the detection of the radiation on the entire front surface of the detector, so as to only minimally attenuate the passage of particles.

The measurement procedure involves a series of steps to obtain the concentration of each radioactive elements present in the sample being investigated as the end result. Said procedure comprises the following main steps:
1. Sample measurement using the general schemes as shown in Fig. 1 and 2 to produce an energy spectrum of the X photons emitted by the sample.
2. Measurement of the radioactive measurement background using the previous scheme but in the absence of the sample to determine an energetic spectrum due to the intrinsic radioactive background of the measurement apparatus, said resulting spectrum is to be subtracted from the result of step 1.
3. Analysis of the energetic spectra, produced at the previous steps 1 and 2, through a program suitable for determining the number of counts produced by each individual X emission for each radioactive element (isotope) considered.
   In non-limiting embodiment examples, known analysis programs can be used, such as: GammaVision and Maestro (ORTEC), Genie (Canberra), adapted to transform the captured data in a column chart.
4. Digital computer simulation to determine, given the detector, the sample and the energetic spectra of X-rays, measurement of X-ray detection efficiency by the detection system in the configuration considered.
   In non-limiting embodiment examples, known simulation software programs may be used (such as Montecarlo), adapted to track the trajectories of particles and their interaction with matter, determining for each of the particles generated the energy released within the various volumes described in the measurement system consisting of the detector and the sample that serves as the source. This allows determining the distribution of energy released into the detector by a known source within the sample and definite energy. This enables the direct reconstruction of the measurement efficiency of particles emitted by the source, the geometry of the measurement apparatus and the energy of the emitted particles being defined.
5. Determination of the branching ratio (BR) of each X row considered; said values are known and shown in tables and BR data available and tabulated on reference bibliography and Internet websites (such as www.lbl.gov , http://ie.lbl.gov/toi/), which show the energies of X photons emitted during the decay of the radioisotopes and the respective BR values.
6. Determination of the intrinsic radioactivity (specific activity) present in each sample and for each radioisotope considered, as a weighted average of the number of counts with respect to the measurement and branching-ratio efficiency values in the time unit considered. This determination can be summarized in the following relation:
$‶ Attività specifica ″ = specific activity$ $Attività Specifica \left[\frac{Bq}{kg}\right] = \frac{\frac{CountSig}{{t}_{s}} - \frac{CountBack}{{t}_{B}}}{m ⋅ ε ⋅ BR}$ Where:
- **CountSig** represents the integral of the counts relating to the single X row (in the presence of the sample);
- **CountBack** represents the integral of the background counts within the same energy region as X row **CountSig** (in the absence of the sample);
- **t_{S}** and **t_{B}** are the sample and background measurement times;
- **m** is the mass of the sample to be analyzed;
- **ε** is the measurement efficiency of the apparatus determined by numerical simulation;
- **BR** is the Branching Ratio that tells us the probability of emission of a photon following decay.

All of the above parameters originate from measurements of the sample and of the background, from numerical simulations, from the measurement of the sample mass and from nuclear tables that allow determining the BR.

The final analysis provides the combination of all rows for a given radioisotope, in other words each row provides an activity for the sample. Since multiple rows are related to the same element, once the activity is obtained, an average (with appropriate weights) of the data obtained is produced, properly taking into account any errors on the values obtained.

In particular, steps 1 and 2 of the procedure are the signal and background acquisition steps for a predetermined time and can also be inverted in the order.

Said predetermined time preferably falls within the range of between 500 seconds and 1 day but can be appropriately set by the man skilled in the art according to the specific features of the measurement system, including the activities and the size of the sample to be measured.

According to the method of the invention, the sample to be analyzed will not undergo any chemical pretreatment but will be simply placed in dedicated sample holders that will then be placed in correspondence of one or more detectors. The total sample mass will not be large but will be arranged so as to cover the largest possible surface, thereby taking a substantially stratiform shape with two main sides. The average thickness of the sample may be extremely thin, a large thickness albeit possible does not produce an actual increase in sensitivity.

In a preferred embodiment of the invention, the sample is characterized by an area of the main sides ≥ 10 cm² and by a thickness ≤ 1 cm.

In case of solid material, a surface at least equal to or larger than that of the detector(s) is exposed;
In case of liquid or powder material, a plastic container can be used with low Z (preferably <20), low density (preferably <1 g/cm3) (e.g. low density polyethylene) with a height of preferably less 2 cm and a total surface at least equal to or greater than that of the detector(s). The walls of such containers will preferably have a thickness equal to or smaller than 0.5 mm.

As regards the determination of the measurement efficiency, the following factors shall be taken into account: energy of X row emitted by the radioisotope, matrix within which the radioisotope is dispersed, sample shape, density and physical form (solid, powder or other) thereof.

This determination can be made, as mentioned above, by appropriate simulators that carry out a virtual reconstruction of what in reality represents the actual measurement. Therefore, all the information that allows virtually reconstructing the value measured has to be entered in the simulator. The measurement system for an operator is defined once and for all (detector type and relative position in space), what changes each time is the sample and must state which photon energies it intends to simulate, then the simulator propagates the physics to virtually reconstruct the measurement.

The probability of having a sum of rows is very low because the single row should be observed and only with very high event rates there would be the appearance of sum rows. Upon emission, each X row is a single row.

The result provided by the procedure is the specific activity for a given sample and a given element obtained from the average of the various rows measured. The information about the composition and other data of the sample is already included in the determination of the parameters of interest and do not count for the final result. What an operator wants to know is how radioactive is, per unit mass, the sample that he/she measured: this, he/she wants to know its specific radioactivity.

With this approach, it is possible to ensure sensitivity levels well below 100 Bq/kg, a universally accepted value as a clearance level for the elements up to uranium and transuranium elements considered.

In a non-limiting embodiment example, the device for detecting radioactive elements object of the invention is organized according to the logical-functional block diagram in figure 3, reflecting the steps of the method described above.

Two separate channels are available in a variant, one for assessing the emissions of the source (sample) to be analyzed, the other for assessing the background activity in the absence of the sample, to be subtracted from the measurement in the presence of the sample. However, the same channel may be used at different times, in the absence or in the presence of the sample.

The detector can consist of a block called "large surface x-ray detector", having the features defined above.

The electronics for pretreating the output signals from the detector includes a preamplifier and a wave shaper and final amplifier of a known type.

Said electronics provides amplitude values to an A/D converter and ADC/MCA multichannel analyzer, adapted to provide an output histogram, which shows how many times the input amplitude has been produced, and then it encodes the energy amplitude distribution of the events observed in the analysis time unit. It then performs a conversion of how often the predetermined energy values have been deposited within the detector, in a distribution of amplitudes in the measurement time, with a diagram that shows the energy on the X-axis and the number of times the energy occurred during the measurement time interval on the Y-axis.

The "energetic spectrum" block translates the input amplitude spectrum into an energy spectrum.

The blocks described above carry out the functions of steps 1 and 2 of the method mentioned above.

The "analysis software" block carries out the functions described above in step 3 of the method, namely it analyzes the spectrum generated by the "energetic spectrum" block and provides output values that are used for the determination of the counting rate of the X rays produced by the sample or by the background activity, respectively.

The counting rates of the background X rays are subtracted from those produced by the sample. The output provides useful values for the block that carries out the determination of the weighted average.

The "analysis software" block analyzes the spectrum generated by the "energetic spectrum" block, also for the purpose of performing the functions described in step 5 of the method, which are to provide the values to be compared with values present in the databases described above in order to identify the radiation-radionuclide energy values and then determine the "branching-ratio" values defined above.

There is a block that performs the simulation useful for calculating the X-ray detection efficiency according to step 4 of the method described above.

The "weighted average" block determines said weighted average value based on the data it receives at the inputs relative to the X-ray counting rate, branching-ratio and X-ray detection efficiency values. At the output, you get the determination of the source radioactivity (sample), according to what described above in step 6 of the method. Therefore, the object of the invention is not so much to achieve extreme measurement sensitivity, which is already possible through other measurement techniques, but to provide the operator with a flexible tool that allows rapid screening of samples to be analyzed while ensuring an immediate action whenever in a critical condition.

These objects are achieved due to the fact that: the treatments on the sample to be analyzed are eliminated, the mass of the sample to be analyzed is small, thus eliminating sometimes significant problems of logistics, the total analysis time can be reduced to the order of the hour, many of the implementable detection systems are transportable and therefore can be installed directly at the sampling points without the need for large laboratory infrastructure. The applicability of the proposed method may be referred to the following cases:
- Monitoring of areas affected by radioactive fall-out.
- Monitoring and control of areas within nuclear installations.
- Measurement of contaminated materials or resulting from the treatment of radioactive waste.
- Study of material used for purposes of possible nuclear proliferation, albeit on thin thickness.
- Possible application in systems where uranium and transuranic elements are treated.
- Measurement of all the radioactive decays that, by emitting mainly low-energy photons, require a high large area detector and high energy resolution.

The invention is particularly advantageous for the determination of actinides; X-rays resulting from the alpha decays of these radioisotopes are emitted with relatively high BR, such as to allow the determination of their concentration in the sample in a few hours of collecting data with high sensitivity.

Embodiment variants of the non-limiting example described are possible without departing from the scope of protection of the present invention, comprising all the equivalent embodiments for a man skilled in the art.

The elements and the features shown in the different preferred embodiments may be combined without departing from the scope of protection of the present invention.

From the above description, the man skilled in the art is able to implement the object of the invention without introducing any further construction details.

## Claims

1. Method for detecting intrinsic radioactivity of radioactive samples, said method comprising a measurement of emission of X photons from said radioactive samples, said samples comprising at least one transuranic element, and said method also comprising the following steps:
- providing a sample of material to be subjected to said measurement of emission of X photons, said sample being stratiform and having two main sides,
- placing one or more semiconductor-type or bolometer-type detectors of X photons near one or two of said two main sides of the sample, said detectors comprising surface covering the whole or most of the area of said main sides;
- measuring said emission of X photons, detected by said one or more detectors of X photons, respectively in the presence and in the absence of said sample, for a predetermined time interval;
- determining the energetic spectrum of said emission of X photons, respectively in the presence and in the absence of said sample, by measuring the number of counts produced by said emission;
- subtracting said measurement of the number of counts in the absence of the sample from said measurement of the number of counts in the presence of the sample, thus obtaining a useful measurement of the number of counts;
- estimating the X-ray detection efficiency with reference to said one or more detectors, said sample, and said energetic spectrum;
- determining the branching ratio (BR) of each row of said emission of X photons;
- determining said intrinsic radioactivity as a weighted mean value of said number of counts with respect to the measured values of detection efficiency and branching ratio within said predetermined time interval.

2. Method for detecting intrinsic radioactivity of radioactive samples according to claim 1, wherein said semiconductor is planar silicon or planar germanium.

3. Method for detecting intrinsic radioactivity of radioactive samples according to claim 1, wherein said one or more detectors are efficient within the energy region of interest from 5 keV to 30 keV, with an energetic resolution <500 eV FWHM.

4. Method for detecting intrinsic radioactivity of radioactive samples according to claim 1, wherein said one or more detectors have a surface ≥ 10 cm².

5. Method for detecting intrinsic radioactivity of radioactive samples according to claim 1, wherein said weighted mean value, or said specific activity, is evaluated by means of the relation: $Attività specifica = Specific activity$ $Attività Specifica \left[\frac{Bq}{kg}\right] = \frac{\frac{CountSig}{{t}_{s}} - \frac{CountBack}{{t}_{B}}}{m ⋅ ε ⋅ BR}$ where:
- **CountSig** represents the integral of the counts relating to each row of said emission of X photons (in the presence of the sample);
- **CountBack** represents the integral of the background counts within the same energy region as the X peak **CountSig** (in the absence of the sample);
- **t_{S}** and **t_{B}** are the sample and background measurement times;
- m is the mass of the sample to be analyzed;
- **ε** is said X-ray detection efficiency;
- **BR** is said branching ratio.

6. Method for detecting intrinsic radioactivity of radioactive samples according to claim 1, wherein said predetermined time is comprised in the range of 500 seconds to 1 day of measurement.

7. Apparatus adapted for detecting intrinsic radioactivity of radioactive samples, **characterized in that** it is adapted to carry out a measurement of emission of X photons from said radioactive samples, said samples comprising at least one transuranic element, and **in that** it comprises:
- one or more semiconductor-type or bolometer-type detectors of X photons, said one or more detectors being operationally brought near one or two main sides of a sample of material to be subjected to said measurement of emission of X photons, said sample being stratiform and having said two main sides, said one or more detectors being **characterized by** a surface covering the whole or most of the area of one or two of said main faces;
- means adapted to measure said emission of X photons, said emission being detected by said one or more detectors of X photons, respectively in the presence and in the absence of said sample, for a predetermined time interval;
- means adapted to carry out in a time interval taken into account, operations for:
- determining the energetic spectrum of said emission of X photons, respectively in the presence and in the absence of said sample, by measuring the number of counts produced by said emission;
- subtracting said measurement of the number of counts in the absence of the sample from said measurement of the number of counts in the presence of the sample, thus obtaining a useful measurement of the number of counts;
- estimating the X-ray detection efficiency with reference to said one or more detectors, said sample, and said energetic spectrum;
- determining the branching ratio (BR) of each row of said emission of X photons;
- determining said intrinsic radioactivity as a weighted mean value of said number of counts with respect to the measured values of detection efficiency and branching ratio within said time interval taken into account.

8. Apparatus for detecting intrinsic radioactivity of radioactive samples according to claim 7, wherein said semiconductor is planar silicon or planar germanium.

9. Apparatus for detecting intrinsic radioactivity of radioactive samples according to claim 7, wherein said one or more detectors are efficient within the energy region of interest from 5 keV to 30 keV, with an energetic resolution of <500 eV FWHM

10. Apparatus for detecting intrinsic radioactivity of radioactive samples according to claim 7, wherein said one or more detectors have a surface ≥ 10 cm².

## Patentansprüche

1. Verfahren zum Detektieren intrinsischer Radioaktivität von radioaktiven Proben, wobei das Verfahren eine Emissionsmessung von Röntgenphotonen von den radioaktiven Proben umfasst, wobei die Proben mindestens ein transuranisches Element umfassen und das Verfahren auch die folgenden Schritte umfasst:
- Bereitstellen einer Materialprobe, die der Emissionsmessung von Röntgenphotonen zu unterziehen ist, wobei die Probe geschichtet ist und zwei Hauptseiten aufweist,
- Platzieren eines oder mehrerer Halbleitertyp- oder Bolometertyp-Detektoren von Röntgenphotonen nahe einer oder zwei der zwei Hauptseiten der Probe, wobei die Detektoren eine Oberfläche umfassen, die den gesamten oder Großteil des Bereichs der Hauptseiten abdeckt;
- Messen der Emission von Röntgenphotonen, die von dem einen oder den mehreren Detektoren von Röntgenphotonen detektiert sind, jeweils in der Gegenwart und in der Abwesenheit der Probe für ein vorgegebenes Zeitintervall;
- Ermitteln des Energiespektrums der Emission von Röntgenphotonen jeweils in der Gegenwart und in der Abwesenheit der Probe, indem die Anzahl von Zählungen gemessen wird, die von der Emission erzeugt werden;
- Abziehen der Messung der Anzahl von Zählungen in der Abwesenheit der Probe von der Messung der Anzahl von Zählungen in der Gegenwart der Probe, wodurch eine nutzbare Messung der Anzahl von Zählungen erhalten wird;
- Schätzen der Röntgendetektionseffizienz in Bezug auf den einen oder die mehreren Detektoren, die Probe und das Energiespektrum;
- Ermitteln des Verzweigungsverhältnisses (BR) jeder Reihe der Emission von Röntgenphotonen;
- Ermitteln der intrinsischen Radioaktivität als ein gewichteter Mittelwert der Anzahl von Zählungen in Bezug auf die gemessenen Detektionseffizienzwerte und das Verzweigungsverhältnis innerhalb des vorgegebenen Zeitintervalls.

2. Verfahren zum Detektieren intrinsischer Radioaktivität radioaktiver Proben nach Anspruch 1, wobei der Halbleiter planares Silizium oder planares Germanium ist.

3. Verfahren zum Detektieren intrinsischer Radioaktivität von radioaktiven Proben nach Anspruch 1, wobei der eine oder die mehreren Detektoren innerhalb des Energiebereichs von Interesse von 5 keV bis 30 keV effizient sind, mit einer energetischen Auflösung <500 eV FWHM.

4. Verfahren zum Detektieren intrinsischer Radioaktivität von radioaktiven Proben nach Anspruch 1, wobei der eine oder die mehreren Detektoren einer Oberfläche ≥ 10cm² aufweisen.

5. Verfahren zum Detektieren intrinsischer Radioaktivität von radioaktiven Proben nach Anspruch 1, wobei der gewichtete Mittelwert oder die spezifische Aktivität mittels der Beziehung evaluiert ist: $Attività specifica = Spezifische Aktivität$ $Attività Specifica \left[\frac{Bq}{kg}\right] = \frac{\frac{CountSig}{{t}_{S}} - \frac{CountBack}{{t}_{B}}}{m ⋅ ε ⋅ BR}$ wo:
- **CountSig** die Ganzzahl der Zählungen bezüglich jeder Reihe der Emission von Röntgenphotonen (in der Gegenwart der Probe) darstellt;
- **CountBack** die Ganzzahl der Hintergrundzählungen innerhalb desselben Energiebereichs wie die Röntgenspitze **CountSig** (in der Abwesenheit der Probe) darstellt;
- **t_{S}** und **t**_{B} die Proben- und Hintergrundmessungszeit sind;
- **m** die Masse der zu analysierenden Probe ist;
- **ε** die Röntgenstrahldetektionseffizienz ist;
- **BR** das Verzweigungsverhältnis ist.

6. Verfahren zum Detektieren intrinsischer Radioaktivität von radioaktiven Proben nach Anspruch 1, wobei die vorgegebene Zeit in der Spanne von 500 Sekunden bis 1 Tag an Messung umfasst ist.

7. Einrichtung, die zum Detektieren intrinsischer Radioaktivität von radioaktiven Proben angepasst ist, **dadurch gekennzeichnet, dass** sie angepasst ist, eine Emissionsmessung von Röntgenphotonen von den radioaktiven Proben umzusetzen, wobei die Proben mindestens ein transuranisches Element umfassen und dadurch, dass sie umfasst:
- einen oder mehrere Halbleitertyp- oder Bolometertyp-Detektoren von Röntgenphotonen, wobei der eine oder die mehreren Detektoren betriebsbereit nahe an eine oder zwei Hauptseiten einer Probe von Material gebracht werden, das der Emissionsmessung von Röntgenphotonen zu unterziehen ist, wobei die Probe geschichtet ist und zwei Hauptseiten aufweist, wobei der eine oder die mehreren Detektoren durch eine Oberfläche gekennzeichnet sind, die den gesamten oder Großteil des Bereichs einer oder zweier der Hauptflächen abdeckt;
- Mittel, das angepasst ist, die Emission von Röntgenphotonen zu messen, wobei die Emission von einem oder mehreren Detektoren von Röntgenphotonen, jeweils in der Gegenwart und in der Abwesenheit der Probe, für ein vorgegebenes Zeitintervall detektiert wird;
- Mittel, das angepasst ist, in einem berücksichtigten Zeitintervall Betriebe umzusetzen zum:
- Ermitteln des Energiespektrums der Emission von Röntgenphotonen, jeweils in der Gegenwart und in der Abwesenheit der Probe, indem die Anzahl von den von der Emission erzeugten Zählungen gemessen werden;
- Abziehen der Messung der Anzahl von Zählungen in der Abwesenheit der Probe von der Messung der Anzahl von Zählungen in der Gegenwart der Probe, wodurch eine nutzbare Messung der Anzahl von Zählungen erhalten wird;
- Schätzen der Röntgendetektionseffizienz in Bezug auf den einen oder die mehreren Detektoren, die Probe und das Energiespektrum;
- Ermitteln des Verzweigungsverhältnisses (BR) jeder Reihe der Emission von Röntgenphotonen;
- Ermitteln der intrinsischen Radioaktivität als einen gewichteten Mittelwert der Anzahl von Zählungen in Bezug auf die gemessenen Detektionseffizienzwerte und das Verzweigungsverhältnis innerhalb des berücksichtigten Zeitintervalls.

8. Einrichtung zum Detektieren intrinsischer Radioaktivität von radioaktiven Proben nach Anspruch 7, wobei der Halbleiter planares Silizium oder planares Germanium ist.

9. Einrichtung zum Detektieren intrinsischer Radioaktivität von radioaktiven Proben nach Anspruch 7, wobei der eine oder die mehreren Detektoren innerhalb des Energiebereichs von Interesse von 5 keV bis 30 keV effizient sind, mit einer energetischen Auflösung <500 eV FWHM.

10. Einrichtung zum Detektieren intrinsischer Radioaktivität von radioaktiven Proben nach Anspruch 7, wobei der eine oder die mehreren Detektoren eine Oberfläche ≥ 10cm² aufweisen.

## Revendications

1. Procédé de détection de radioactivité intrinsèque d'échantillons radioactifs, ledit procédé comprenant
une mesure d'émission de photons X depuis lesdits échantillons radioactifs,
lesdits échantillons comprenant au moins un élément transuranien, et ledit procédé comprenant également les étapes suivantes :
- la fourniture d'un échantillon de matériau à soumettre à ladite mesure d'émission de photons X, ledit échantillon étant stratiforme et ayant deux côtés principaux,
- la mise en place d'un ou de plusieurs détecteurs de type à semi-conducteur ou de type bolomètre de photons X près de l'un ou de deux desdits deux côtés principaux de l'échantillon, lesdits détecteurs comprenant une surface couvrant la totalité ou une majeure partie de l'aire desdits côtés principaux
- la mesure de ladite émission de photons X, détectée par lesdits un ou plusieurs détecteurs de photons X, respectivement en présence et en l'absence dudit échantillon, pendant un intervalle de temps prédéterminé ;
- la détermination du spectre énergétique de ladite émission de photons X, respectivement en présence et en l'absence dudit échantillon, par la mesure du nombre de comptes produits par ladite émission ;
- la soustraction de ladite mesure du nombre de comptes en l'absence de l'échantillon de ladite mesure du nombre de comptes en présence de l'échantillon, obtenant ainsi une mesure utile du nombre de comptes ;
- l'estimation de l'efficacité de détection par rayons X en référence auxdits un ou plusieurs détecteurs, audit échantillon, et audit spectre énergétique ;
- la détermination du rapport d'embranchement (BR) de chaque rangée de ladite émission de photons X ;
- la détermination de ladite radioactivité intrinsèque en tant que valeur moyenne pondérée dudit nombre de comptes par rapport aux valeurs mesurées d'efficacité de détection et au rapport de branchement dans ledit intervalle de temps prédéterminé.

2. Procédé de détection de radioactivité intrinsèque d'échantillons radioactifs selon la revendication 1, dans lequel ledit semi-conducteur est du silicium planaire ou du germanium planaire.

3. Procédé de détection de radioactivité intrinsèque d'échantillons radioactifs selon la revendication 1, dans lequel lesdits un ou plusieurs détecteurs sont efficaces au sein de la région d'énergie d'intérêt de 5 keV à 30 keV, avec une résolution énergétique < 500 eV de LMH.

4. Procédé de détection de radioactivité intrinsèque d'échantillons radioactifs selon la revendication 1, dans lequel lesdits un ou plusieurs détecteurs ont une surface ≥ 10 cm².

5. Procédé de détection de radioactivité intrinsèque d'échantillons radioactifs selon la revendication 1, dans lequel ladite valeur moyenne pondérée, ou ladite activité spécifique, est évaluée au moyen de la relation : $Attività specifica = activité spécifique$ $Attività Specifica \left[\frac{Bq}{kg}\right] = \frac{\frac{CountSig}{{t}_{s}} - \frac{CountBack}{{t}_{B}}}{m ⋅ ε ⋅ BR}$ où :
- CountSig représente l'intégrale des comptes relatifs à chaque rangée de ladite émission de photons X (en présence de l'échantillon) ;
- CountBack représente l'intégrale des comptes d'effet parasite au sein de la même région d'énergie que le CountSig de crête de X (en l'absence de l'échantillon) ;
- t_{S} et t_{B} sont les temps de mesure d'échantillon et des faits parasites ;
- m est la masse de l'échantillon à analyser ;
- ε est ladite efficacité de détection par rayons X ;
- BR est ledit rapport d'embranchement.

6. Procédé de détection de radioactivité intrinsèque d'échantillons radioactifs selon la revendication 1, dans lequel ledit temps prédéterminé est compris dans la plage de 500 secondes à 1 jour de mesure.

7. Appareil adapté pour détecter une radioactivité intrinsèque d'échantillons radioactifs, **caractérisé en ce qu'**il est adapté pour réaliser une mesure d'émission de photons X depuis lesdits échantillons radioactifs, lesdits échantillons comprenant au moins un élément transuranien et **en ce qu'**il comprend :
- un ou plusieurs détecteurs de type à semi-conducteur ou de type bolomètre de photons X, lesdits un ou plusieurs détecteurs étant amenés opérationnellement près de l'un ou des deux côtés principaux d'un échantillon de matériau à soumettre à ladite mesure d'émission de photons X, ledit échantillon étant stratiforme et ayant lesdits deux côtés principaux, lesdits un ou plusieurs détecteurs étant **caractérisés par** une surface couvrant la totalité ou une majeure partie de l'aire de l'un ou de deux desdites faces principales ;
- des moyens adaptés pour mesurer ladite émission de photons X, ladite émission étant détectée par lesdits un ou plusieurs détecteurs de photons X, respectivement en présence et en l'absence dudit échantillon, pendant un intervalle de temps prédéterminé ;
- des moyens adaptés pour réaliser dans un intervalle de temps pris en compte, des opérations pour :
- déterminer le spectre énergétique de ladite émission de photons X, respectivement en présence et en l'absence dudit échantillon, par la mesure du nombre de comptes produits par ladite émission ;
- soustraire ladite mesure du nombre de comptes en l'absence de l'échantillon de ladite mesure du nombre de comptes en présence de l'échantillon, obtenant ainsi une mesure utile du nombre de comptes ;
- estimer l'efficacité de détection par rayons X en référence audit un ou plusieurs détecteurs, audit échantillon, et audit spectre énergétique ;
- déterminer le rapport d'embranchement (BR) de chaque rangée de ladite émission de photons X ;
- déterminer ladite radioactivité intrinsèque en tant que valeur moyenne pondérée dudit nombre de comptes par rapport aux valeurs mesurées d'efficacité de détection et au rapport d'embranchement dans ledit intervalle de temps pris en compte.

8. Appareil de détection de radioactivité intrinsèque d'échantillons radioactifs selon la revendication 7, dans lequel ledit semi-conducteur est du silicium planaire ou du germanium planaire.

9. Appareil de détection de radioactivité intrinsèque d'échantillons radioactifs selon la revendication 7, dans lequel lesdits un ou plusieurs détecteurs sont efficaces au sein de la région d'énergie d'intérêt de 5 keV à 30 keV, avec une résolution énergétique < 500 eV de LMH.

10. Appareil de détection de radioactivité intrinsèque d'échantillons radioactifs selon la revendication 7, dans lequel lesdits un ou plusieurs détecteurs ont une surface ≥ 10 cm².
